# EUROPEAN PATENT APPLICATION

(11) **EP 4 800 781 A1**
(43) Date of publication of application: **02.09.2026**
(21) Application number: 24882384.1
(22) Date of filing: 22.10.2024
(51) Int. Cl.: H01M 4/86, H01M 4/90, H01M 8/10

(54) **CATALYST LAYER FORMING COMPOSITION**

(30) Priority: 24.10.2023 JP 2023182668
(71) Applicant: AGC Inc., Chiyoda-ku Tokyo 100-8405 (JP)
(72) Inventor: KATO Ryogo, Tokyo 100-8405 (JP); SHIONO Takeshi, Tokyo 100-8405 (JP)
(74) Representative: Müller-Boré & Partner Patentanwälte PartG mbB
(86) International application number: PCT/JP2024/037598
(87) International publication number: WO 2025/089273

(57) **Abstract**

Provided is a catalyst layer-forming composition capable of forming a catalyst layer in which the formation of cracks is inhibited. A catalyst layer-forming composition of the present invention includes a fluorinated polymer that has a unit having a cyclic ether structure and has an ion-exchange group; a catalyst; and a solvent, wherein the solvent includes water and an alcohol, the alcohol includes propanol, a content of the water is 50 mass% or more based on a total mass of the solvent, and a content of the propanol is 50 mass% or more based on a total mass of the alcohol.

## Description

### TECHNICAL FIELD

The present invention relates to a catalyst layer-forming composition.

### BACKGROUND ART

It is known that a membrane electrode assembly of a polymer electrolyte fuel cell includes an anode having a catalyst layer, a cathode having a catalyst layer, and a polymer electrolyte membrane disposed between the anode and the cathode.

Since oxygen is supplied from the cathode side during operation of the polymer electrolyte fuel cell, performance of the polymer electrolyte fuel cell can be further improved if oxygen transport resistance at the cathode is reduced. Thus, Patent Document 1 discloses that a fluorinated polymer that is excellent in oxygen permeability and includes a unit having a cyclic structure is used for a catalyst layer of a cathode.

### PRIOR ART DOCUMENTS

### PATENT DOCUMENTS

| | |
|---|---|
| Patent Document 1: | WO2016/104380 |

### DISCLOSURE OF INVENTION

### TECHNICAL PROBLEM

Since polymer electrolyte fuel cells are used over a long period of time in some cases, there is a need for further improvement in the durability of the various components included therein. The present inventors formed catalyst layers with catalyst layer-forming liquids (catalyst layer-forming compositions) as disclosed in Patent Document 1, and consequently discovered that, in some cases, the resulting catalyst layers were not sufficiently inhibited from cracking, depending on the chemical composition of the catalyst layer-forming compositions, and, therefore, there is room for improvement.

The present invention has been made in view of the above-described problem, and an object of the present invention is to provide a catalyst layer-forming composition capable of forming a catalyst layer in which the formation of cracks is inhibited.

### SOLUTION TO PROBLEM

As a result of intensive studies on the above problem, the present inventors have found that the above objects can be achieved by the following configurations.
[1] A catalyst layer-forming composition comprising:
   a fluorinated polymer that has a unit having a cyclic ether structure and includes an ion-exchange group;
   a catalyst; and
   a solvent, wherein
   the solvent includes water and an alcohol,
   the alcohol includes propanol,
   a content of the water is 50 mass% or more based on a total mass of the solvent, and
   a content of the propanol is 50 mass% or more based on a total mass of the alcohol.
[2] The catalyst layer-forming composition according to [1], wherein
   the catalyst includes a carrier and a metal supported on the carrier, and
   a ratio of a mass of the fluorinated polymer to a mass of the carrier is 0.75 or more.
[3] The catalyst layer-forming composition according to [1] or [2], wherein the carbon carrier has a specific surface area of 700 m²/g or more.
[4] The catalyst layer-forming composition according to any one of [1] to [3], wherein the content of the water is less than 80 mass% based on the total mass of the solvent.
[5] The catalyst layer-forming composition according to any one of [1] to [4], wherein the catalyst layer-forming composition has a solid concentration of 10 mass% or less.
[6] The catalyst layer-forming composition according to any one of [1] to [5], wherein the fluorinated polymer has an ion exchange capacity of 0.8 meq/g dry resin or more.
[7] The catalyst layer-forming composition according to any one of [1] to [6], wherein a content of the unit having a cyclic ether structure is 50 mol% or more based on all units in the fluorinated polymer.
[8] The catalyst layer-forming composition according to any one of [1] to [7], wherein the fluorinated polymer has a unit represented by formula (A-2), shown later:
   where
   R^{F1} and R^{F2} are each independently a perfluoroalkylene group having 1 to 3 carbon atoms or a divalent group corresponding to a perfluoroalkylene group except that a -CF₂- is substituted with an etheric oxygen atom,
   R^{F3} is a perfluoroalkylene group having 1 to 6 carbon atoms and optionally having an etheric oxygen atom, and
   m is 0 or 1.
[9] The catalyst layer-forming composition according to any one of [1] to [8], wherein the fluorinated polymer has a unit based on tetrafluoroethylene.
[10] The catalyst layer-forming composition according to any one of [1] to [9], which is used for forming a catalyst layer of a cathode of a membrane electrode assembly including, an anode having a catalyst layer, the cathode having the catalyst layer, and a polymer electrolyte membrane disposed between the anode and the cathode.
[11] The catalyst layer-forming composition according to any one of [1] to [10], wherein the membrane electrode assembly as defined in [10] is a membrane electrode assembly for use in a polymer electrolyte fuel cell.

### ADVANTAGEOUS EFFECTS OF INVENTION

The present invention can provide a catalyst layer-forming composition capable of forming a catalyst layer resistant to cracking.

### BRIEF DESCRIPTION OF DRAWINGS

Fig. 1 is a cross-sectional view illustrating an example of a membrane electrode assembly.
Fig. 2 is an image of a surface of a catalyst layer corresponding to Example 1-1 in the Examples section.
Fig. 3 is an image of a surface of a catalyst layer corresponding to Example 1-2 in the Examples section.
Fig. 4 is an image of a surface of a catalyst layer corresponding to Example 1-3 in the Examples section.
Fig. 5 is an image of a surface of a catalyst layer corresponding to Example 1-6 in the Examples section.
Fig. 6 is an image of a surface of a catalyst layer corresponding to Example 1-7 in the Examples section.

### DESCRIPTION OF EMBODIMENTS

The definitions of the following terms apply throughout the present specification and the claims unless otherwise specified.

The term "ion exchange group" means a group that can exchange at least some of the ions included in the group for other ions, and examples thereof include acid-form sulfonic acid functional groups and acid-form carboxylic acid functional groups described below.

The term "acid-form sulfonic acid functional group" is a general term for an acid-form sulfonic acid group (-SO₃H) and a salt-form sulfonate group (-SO₃M², where M² is an alkali metal or a quaternary ammonium cation).

The term "acid-form carboxylic acid functional group" is a general term for an acid-form carboxylic acid group (-COOH) and a salt-form carboxylate group (-COOM¹, where M¹ is an alkali metal or a quaternary ammonium cation).

A "group that can be converted to an ion-exchange group", which is also referred to as a "precursor group", means a group that can be converted to an ion-exchange group by a treatment such as hydrolysis or conversion to an acid form.

A "group that can be converted to a sulfonic acid functional group" means a group that can be converted to a sulfonic acid functional group by a treatment such as hydrolysis or conversion to an acid form.

A "group that can be converted to a carboxylic acid functional group" means a group that can be converted to a carboxylic acid functional group by a treatment known in the art such as hydrolysis or conversion to an acid form.

The term "unit" in a polymer means an atomic group formed by polymerization of a monomer and derived from one molecule of the monomer. The unit may be an atomic group formed directly by a polymerization reaction, or may be an atomic group derived by treating a polymer obtained by the polymerization reaction thereby to convert a part of the atomic group into another structure. A constituent unit derived from an individual monomer may be expressed as the name of the monomer followed by "unit".

A unit represented by formula (u11) is expressed as unit (u11). Units represented by other formulae are expressed likewise.

A numerical range expressed using "to" means a range including numerical values recited before and after "to" as lower and upper limit values. For numerical ranges recited stepwise in the present specification, the upper or lower limit value recited in a certain numerical range may be replaced with the upper or lower limit value of another numerical range recited stepwise. For numerical ranges recited in the present specification, the upper or lower limit value recited in a certain numerical range may be replaced with a value shown in Examples.

### [Catalyst Layer-Forming Composition]

A catalyst layer-forming composition of the present invention (hereinafter also referred to as a "present composition") includes a fluorinated polymer, a catalyst, and a solvent, and the fluorinated polymer has a unit having a cyclic ether structure (hereinafter also referred to as "unit A") and includes an ion-exchange group. The solvent includes water and an alcohol. The alcohol includes propanol. The content of the water is 50 mass% or more based on the total mass of the solvent. The content of the propanol is 50 mass% or more based on the total mass of the alcohol.

In the following description, the fluorinated polymer included in the present composition and having unit A and an ion-exchange group is also referred to as a "polymer H".

When a catalyst layer is formed, if a high-density layer of a fluorinated polymer is formed at an interface between the catalyst and the fluorinated polymer, an oxygen transport resistance may increase, and, consequently, the power generation capability of a polymer electrolyte fuel cell may be reduced. For this problem, in the case where a fluorinated polymer including a unit having a cyclic ether structure is used to form the catalyst layer, it is unlikely that polymer chains become densely disposed, and, therefore, the formation of the high density layer is inhibited; consequently, a fuel cell having excellent power generation capability can be easily obtained.

Meanwhile, there is a problem in that the cyclic ether structure causes an adsorption force between the catalyst and the fluorinated polymer to diminish, which increases the likelihood of the formation of cracks in the catalyst layer.

For this problem, the present inventors discovered that even in cases where a fluorinated polymer including a unit having a cyclic ether structure is used, the adsorption force between the fluorinated polymer and the catalyst can be improved by optimizing the chemical composition of the solvent used for the formation of the catalyst layer, and that, consequently, the formation of cracks in the catalyst layer can be inhibited.

From the viewpoint of storage properties, the solids concentration of the present composition is preferably 3 mass% or more, more preferably 4 mass% or more, still more preferably 5 mass% or more, and from the viewpoint of coating properties, it is preferably 10 mass% or less, more preferably 8 mass% or less, still more preferably 6 mass% or less.

Here, the solids concentration is calculated by the following method on the basis of masses of the present composition before and after heating.

After 1 g of the present composition is heated at 180°C for 180 minutes, the mass of the residue is weighed, and the solids concentration is calculated by the following formula. 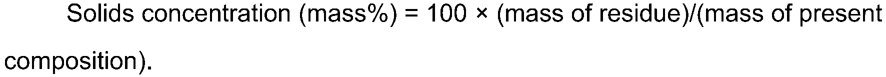 Solids concentration (mass%) = 100 × (mass of residue)/(mass of present composition).

### <Polymer H>

The present composition includes the polymer H. Polymer H is a polymer having unit A and an ion-exchange group.

Unit A is preferably at least one unit selected from the group consisting of a unit (u11), a unit (u12), a unit (u21), a unit (u22), and a unit (u24), in terms of obtaining a catalyst layer having higher oxygen permeability.

In this specification, the unit (u11), the unit (u12), the unit (u21), the unit (u22), and the unit (u24) may be collectively referred to as "specific cyclic ether structural units".

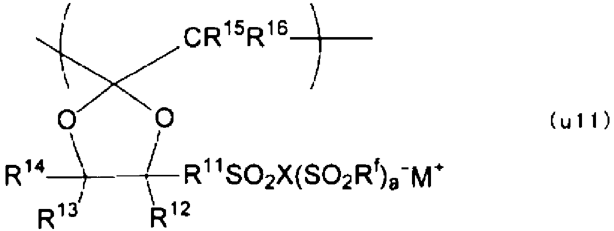

R¹¹ is a divalent perfluoroalkylene group optionally having an etheric oxygen atom. When the perfluoroalkylene group has an etheric oxygen atom, the number of oxygen atoms may be one or two or more. The etheric oxygen atom may be positioned within a carbon-carbon bond of the perfluoroalkylene group, or may be positioned at a carbon atom bond terminal. The perfluoroalkylene group may be linear or branched, and is preferably linear.

R¹², R¹³, R¹⁵, and R¹⁶ are each independently a monovalent perfluoroalkyl group optionally having an etheric oxygen atom, or a fluorine atom. From the viewpoint of high polymerization reactivity, at least one of R¹⁵ and R¹⁶ is preferably a fluorine atom, and more preferably, both are fluorine atoms.

R¹⁴ is a monovalent perfluoroalkyl group optionally having an etheric oxygen atom, a fluorine atom, or a group represented by -R¹¹(SO₂X(SO₂R^{f})ₐ)⁻M⁺. When the perfluoroalkyl group has an etheric oxygen atom, the number of oxygen atoms may be one or two or more. The etheric oxygen atom may be positioned within a carbon-carbon bond of the perfluoroalkyl group, or may be positioned at a carbon atom bond terminal. The perfluoroalkyl group may be linear or branched, and is preferably linear. In formula (u11), when two R¹¹'s are included, the two R¹¹'s may be the same as or different from each other.

M⁺ is H⁺, a monovalent metal cation (e.g., a potassium ion or a sodium ion), or an ammonium ion in which one or more hydrogen atoms are optionally substituted with a hydrocarbon group (e.g., a methyl group or an ethyl group), and H⁺ is preferred from the viewpoint of high conductivity.

R^{f} is a linear or branched perfluoroalkyl group optionally having an etheric oxygen atom. The number of carbon atoms of the perfluoroalkyl group is preferably 1 to 8, particularly preferably 1 to 6. When two or more R^{f}'s are present, the two or more R^{f}'s may be the same as or different from each other.

X is an oxygen atom, a nitrogen atom, or a carbon atom, and when X is an oxygen atom, a = 0; when X is a nitrogen atom, a = 1; and when X is a carbon atom, a = 2.

Specific examples of the -(SO₂X(SO₂R^{f})ₐ)⁻M⁺ group include a sulfonic acid group (-SO₃⁻M⁺ group), a sulfonimide group (-SO₂N(SO₂R^{f})⁻M⁺ group), and a sulfonmethide group (-SO₂C(SO₂R^{f})₂)⁻M⁺ group).

Unit (u11) is preferably unit (u11-1).

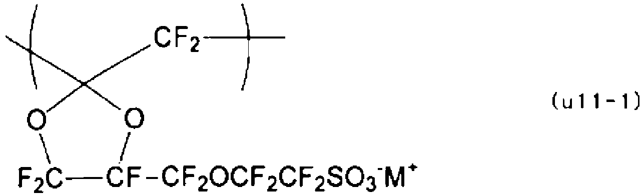

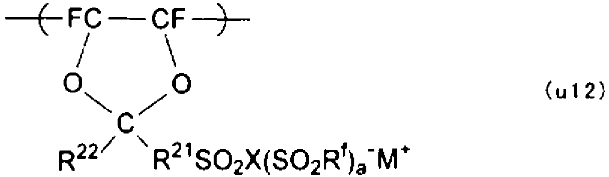

R²¹ is a perfluoroalkylene group having 1 to 6 carbon atoms, or a perfluoroalkylene group having 2 to 6 carbon atoms and having an etheric oxygen atom within a carbon-carbon bond. When the perfluoroalkylene group has an etheric oxygen atom, the number of oxygen atoms may be one or two or more. The perfluoroalkylene group may be linear or branched, and is preferably linear.

R²² is a fluorine atom, a perfluoroalkyl group having 1 to 6 carbon atoms, a perfluoroalkyl group having 2 to 6 carbon atoms and having an etheric oxygen atom within a carbon-carbon bond, or a group represented by -R²¹(SO₂X(SO₂R^{f})ₐ)⁻M⁺. When the perfluoroalkyl group has an etheric oxygen atom, the number of oxygen atoms may be one or two or more. The perfluoroalkyl group may be linear or branched, and is preferably linear. In formula (u12), when two R²¹'s are included, the two R²¹'s may be the same as or different from each other.

M⁺, R^{f}, X, and a respectively have the same meanings as M⁺, R^{f}, X, and a in formula (u11).

Specific examples of unit (u12) include unit (u12-1) and unit (u12-2). In the formulae, M⁺ has the same meaning as M⁺ in formula (u11).

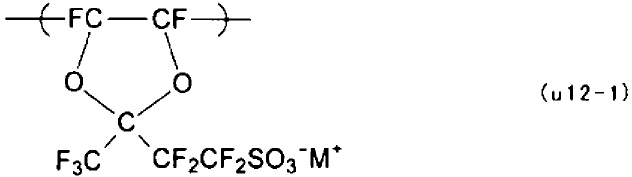

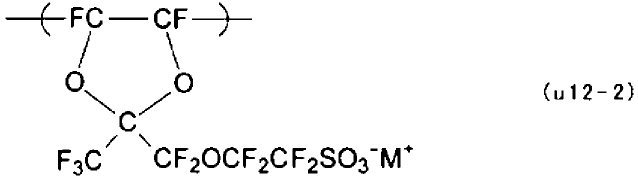

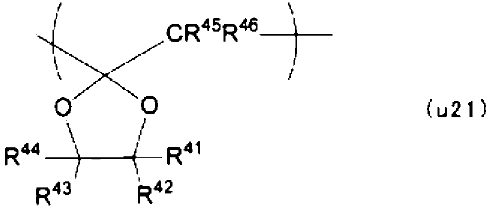

R⁴¹, R⁴², R⁴³, R⁴⁴, R⁴⁵, and R⁴⁶ are each independently a monovalent perfluoroalkyl group optionally having an etheric oxygen atom, or a fluorine atom. When the perfluoroalkyl group has an etheric oxygen atom, the number of oxygen atoms may be one or two or more. The etheric oxygen atom may be positioned within a carbon-carbon bond of the perfluoroalkyl group, or may be positioned at a carbon atom bond terminal. The perfluoroalkyl group may be linear or branched, and is preferably linear.

From the viewpoint of high polymerization reactivity, at least one of R⁴⁵ and R⁴⁶ is preferably a fluorine atom, and particularly preferably, both are fluorine atoms.

Unit (u21) is preferably unit (u21-1).

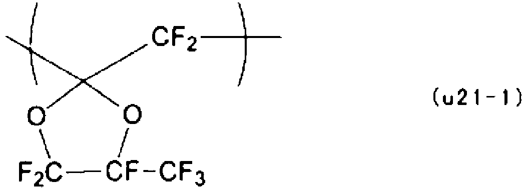

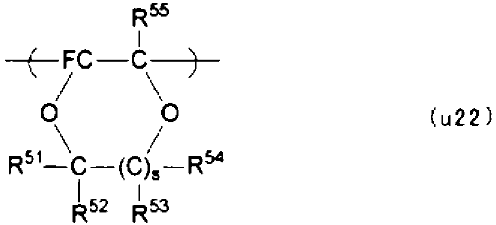

s is 0 or 1, and is preferably 0.

R⁵¹ and R⁵² are each independently a fluorine atom or a perfluoroalkyl group having 1 to 5 carbon atoms, or may be bonded to each other to form a spiro ring (provided that s is 0).

R⁵³ and R⁵⁴ are each independently a fluorine atom or a perfluoroalkyl group having 1 to 5 carbon atoms.

R⁵⁵ is a fluorine atom, a perfluoroalkyl group having 1 to 5 carbon atoms, or a perfluoroalkoxy group having 1 to 5 carbon atoms. From the viewpoint of high polymerization reactivity, R⁵⁵ is preferably a fluorine atom.

The perfluoroalkyl group and the perfluoroalkoxy group may be linear or branched, and are preferably linear.

Unit (u22) is preferably unit (u22-1).

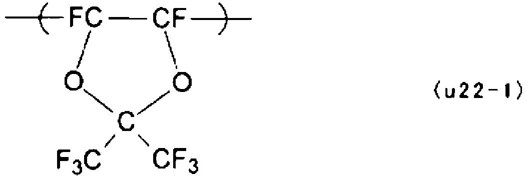

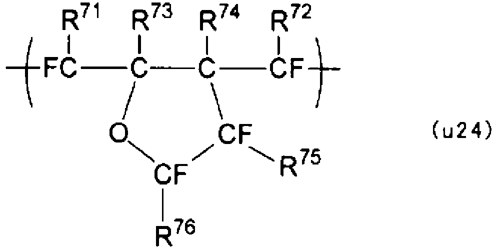

R⁷¹ to R⁷⁶ are each independently a monovalent perfluoroalkyl group optionally having an etheric oxygen atom, or a fluorine atom. When the perfluoroalkyl group has an etheric oxygen atom, the number of oxygen atoms may be one or two or more. The etheric oxygen atom may be inserted within a carbon-carbon bond of the perfluoroalkyl group, or may be inserted at a carbon atom bond terminal. The perfluoroalkyl group may be linear or branched, and is preferably linear.

From the viewpoint of high polymerization reactivity, R⁷¹ to R⁷⁴ are preferably fluorine atoms.

From the viewpoint of providing a catalyst layer more excellent in oxygen permeability, among the specific cyclic ether structure units described above, unit A preferably includes at least one unit selected from the group consisting of unit (u21), unit (u22), and unit (u24), and is more preferably unit (u22).

From the viewpoint of more excellent power generation characteristics of a fuel cell, the content of unit A relative to all units in polymer H is preferably 50 mol% or more, more preferably 55 mol% or more, still more preferably 60 mol% or more.

From the viewpoint of further suppressing the occurrence of cracking of the catalyst layer and from the viewpoint of more excellent power generation characteristics, the content of unit A relative to all units in polymer H is preferably 87 mol% or less, more preferably 80 mol% or less, particularly preferably 75 mol% or less.

Polymer H may include only one type of unit A, or may include two or more types of unit A. When two or more types are included, the content means the total amount thereof.

From the viewpoint of excellent power generation characteristics, polymer H preferably has a unit (hereinafter, also referred to as "unit B") that does not include a cyclic ether structure and has an ion exchange group.

In each unit included in unit B, the number of ion exchange groups is preferably one or more, more preferably two or more from the viewpoint of easily obtaining a polymer having a high molecular weight while maintaining the content of unit A, and still more preferably two from the viewpoint of ease of monomer synthesis.

Unit B is preferably a perfluoromonomer unit having an ion exchange group, more preferably a perfluoropolymer unit having a acid-form sulfonic acid functional group.

The perfluoromonomer unit is preferably unit (u31), unit (A-1), unit (A-2), or unit (A-3), and from the viewpoint of further improving power generation characteristics of a fuel cell, it is more preferably unit (A-1), unit (A-2), or unit (A-3). From the viewpoint of exhibiting more remarkable effects of the present invention, it is still more preferably unit (A-2).

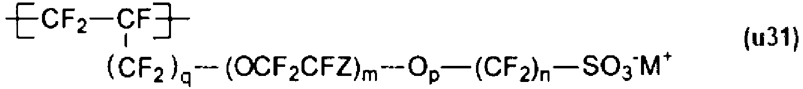

In formula (u31), Z is a fluorine atom or a trifluoromethyl group, q is 0 or 1, m is an integer of 0 to 3, p is 0 or 1, n is an integer of 1 to 12, and m + p > 0. In a case where m is 2 or 3, the plurality of Z's may be the same as or different from each other.

In formula (u31), M⁺ is H⁺, a monovalent metal cation (e.g., a potassium ion or a sodium ion), or an ammonium ion in which one or more hydrogen atoms are optionally substituted with a hydrocarbon group (e.g., a methyl group or an ethyl group), and is preferably H⁺.

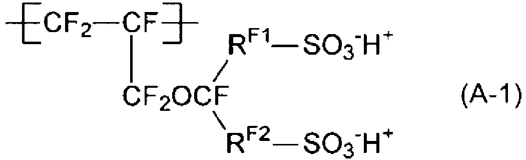

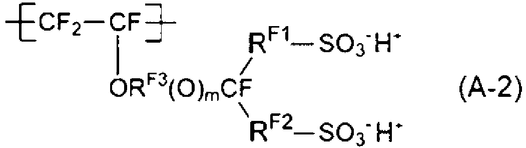

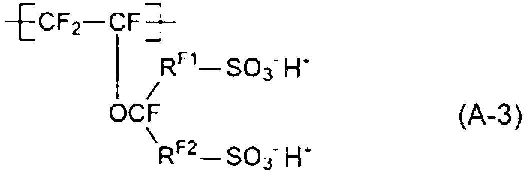

In formula (A-1) to formula (A-3), R^{F1} and R^{F2} are each independently a perfluoroalkylene group having 1 to 3 carbon atoms, or a divalent group derived by substituting -CF₂- of a perfluoroalkylene group with an etheric oxygen atom.

In the divalent group, the etheric oxygen atom may be positioned at a terminal of the perfluoroalkylene group or may be positioned between carbon atoms.

The number of carbon atoms of the divalent group is preferably 1 to 3, more preferably 2 or 3.

Specific examples of R^{F1} and R^{F2} include -CF₂-, -CF₂CF₂-, -CF(CF₃)-, -CF₂CF₂CF₂-, -CF(CF₂CF₃)-, -CF(CF₃)CF₂-, -CF₂CF(CF₃)-, -C(CF₃)(CF₃)-, -CF₂OCF₂CF₂-, and -OCF₂CF₂-.

From the viewpoints of inexpensive raw materials, ease of production, and a further increase in the ion exchange capacity of polymer H, R^{F1} and R^{F2} are each independently preferably a perfluoroalkylene group having 1 or 2 carbon atoms, -CF₂OCF₂CF₂-, or -OCF₂CF₂-. In the case of a perfluoroalkylene group having 2 carbon atoms, it is preferably linear. Specifically, -CF₂-, -CF₂CF₂-, or -CF(CF₃)- is preferred, -CF₂- or -CF₂CF₂- is more preferred, and -CF₂- is still more preferred.

In formula (A-2), R^{F3} is a perfluoroalkylene group having 1 to 6 carbon atoms and optionally having an etheric oxygen atom.

Specific examples of R^{F3} include -CF₂-, -CF₂CF₂-, -CF(CF₃)-, -CF₂CF₂CF₂-, -CF(CF₂CF₃)-, -CF(CF₃)CF₂-, -CF₂CF(CF₃)-, -C(CF₃)(CF₃)-, and -CF₂CF(CF₃)OCF₂CF(CF₃)-.

From the viewpoints of inexpensive raw materials, ease of production, and a further increase in the ion exchange capacity of polymer H, R^{F3} is preferably a perfluoroalkylene group having 1 to 3 carbon atoms. Specifically, -CF₂-, -CF₂CF₂-, or -CF₂CF(CF₃)- is preferred, and -CF₂CF(CF₃)- is more preferred.

In formula (A-2), m is 0 or 1.

From the viewpoint of providing good proton conductivity, the content of unit B relative to all units in polymer H is preferably 13 mol% or more.

From the viewpoint of improving water repellency, increasing drainage properties, and improving power generation efficiency, the content of unit B relative to all units in polymer H is preferably 50 mol% or less.

Polymer H may include only one type of unit B, or may include two or more types of unit B. When two or more types are included, the content means the total amount thereof.

Polymer H preferably include a tetrafluoroethylene (TFE) unit (hereinafter, also referred to as "unit C").

The presence of unit C imparts water repellency, increases water discharge capability of the catalyst layer, and further improves power generation efficiency of a fuel cell.

When polymer H includes unit C, the content of unit C relative to all units in polymer H is preferably 5 mol% or more.

From the viewpoint of improving dispersibility in a polymer solution, the content of unit C relative to all units in polymer H is preferably 35 mol% or less.

Polymer H preferably has a softening temperature of 140°C or more, in terms of achieving better power generation characteristics of fuel cells. The softening temperature is more preferably 150°C or more and even more preferably 160°C or more.

The softening temperature of the polymer H is preferably 300°C or less, in terms of enabling further inhibition of cracking in the catalyst layer. The softening temperature is more preferably 250°C or less and even more preferably 200°C or less.

The softening temperature of the polymer H can be determined in the manner described later in the Examples section.

Polymer H preferably has an ion exchange capacity of 0.8 meq/g dry resin or more, in terms of achieving better durability of fuel cells. The ion exchange capacity is more preferably 1.0 meq/g dry resin or more and even more preferably 1.1 meq/g dry resin or more.

The ion exchange capacity of the polymer H is preferably 1.8 meq/g dry resin or less, in terms of achieving excellent power generation characteristics. The ion exchange capacity is more preferably 1.6 meq/g dry resin or less and even more preferably 1.5 meq/g dry resin or less.

The ion exchange capacity of the polymer H can be determined in the manner described later in the Examples section.

### (Method for Producing Polymer H)

A method for producing polymer H will be described by taking as an example a case where polymer H has an acid-form sulfonic acid group.

One example of the method for producing polymer H is to convert a precursor group of a precursor polymer (hereinafter, also referred to as "polymer F"), in which an acid-form sulfonic acid group in polymer H is a precursor group (specifically, a group represented by -SO₂F), into an acid-form sulfonic acid group (-SO₃⁻H⁺).

One specific example of the method for converting the group represented by -SO₂F, which is a precursor group, into an acid-form sulfonic acid group is to hydrolyze the group represented by -SO₂F of polymer F to be a salt-form sulfonate group, followed by converting the salt-form sulfonate group into an acid form to be an acid-form sulfonic acid group.

The TQ value of polymer F is preferably 300°C or lower, more preferably 290°C or lower, still more preferably 280°C or lower. When the TQ value is equal to or less than the upper limit value, solubility or dispersibility of polymer H in a liquid medium is improved, and thus the composition is easily prepared.

The TQ value of polymer F is preferably 100°C or higher, more preferably 130°C or higher, still more preferably 160°C or higher. When the TQ value is equal to or more than the lower limit value, polymer H having a sufficient molecular weight is obtained, and thus the catalyst layer has high strength.

The TQ value is a value related to the molecular weight of polymer F, and is expressed as the temperature at which a volumetric flow rate of 100 mm³/s is observed. The volumetric flow rate is the amount, expressed in units of mm³/s, of polymer F that flows out when polymer F is caused to melt and flow out from a nozzle (inner diameter: 1 mm, length: 1 mm) at a constant temperature under a pressure of 3 MPa. The TQ value is an indicator of the molecular weight of polymer F, and higher TQ values indicate higher molecular weights.

The TQ value of polymer F is determined by a method described in EXAMPLES given below.

### <Catalyst>

The present composition includes a catalyst.

The catalyst includes a carrier (preferably a porous carrier) and a metal supported on the carrier.

A carbon carrier has a specific surface area of preferably 500 m²/g or more, in terms of enabling further inhibition of the formation of cracks in the catalyst layer, more preferably 700 m²/g or more and even more preferably 800 m²/g or more.

The specific surface area of the carbon carrier is preferably 1,400 m²/g or less, in terms of oxidation durability of polymer electrolyte fuel cells, more preferably 1,300 m²/g or less and even more preferably 1,200 m²/g or less.

The specific surface area of the carbon carrier can be determined in the manner described later in the Examples section.

Specific examples of the carrier (preferably, a porous carrier) include carbon carriers, mesoporous carbons, Ketjen blacks, and acetylene blacks.

Specific examples of the carbon carriers include carbon black powders, graphitized carbons, carbon fibers, and carbon nanotubes.

The carrier (preferably, a porous carrier) may have any shape, and primary particles of the carrier may have any average particle size provided that the carrier can support the metal. The average particle size of the primary particles of the carrier is preferably 30 nm or more and more preferably 50 nm or more and is preferably 300 nm or less and more preferably 200 nm or less.

The "average particle size of the primary particles of the carrier" is an arithmetic mean of measured particle sizes (diameters) of 100 randomly selected primary particles of the carrier as observed under a TEM (transmission electron microscope). In cases where the particles observed do not have a spherical shape, the shape is assumed to be spherical for the measurement of the diameter.

The metal is preferably supported on a carrier.

Specific examples of the metal include platinum and a platinum alloy.

The platinum alloy is preferably an alloy of platinum and at least one metal selected from the group consisting of platinum group metals other than platinum (ruthenium, rhodium, palladium, osmium, and iridium), gold, silver, chromium, iron, titanium, manganese, cobalt, nickel, molybdenum, tungsten, aluminum, silicon, zinc, and tin, more preferably an alloy of platinum and cobalt.

The shape of the metal supported on the carrier is not particularly limited, and is preferably particulate.

The average particle size (number average particle size D50) of the metal supported on the carrier is not particularly limited as long as its performance can be exhibited, and is preferably 1 nm or more, more preferably 2 nm or more, and is preferably 10 nm or less, more preferably 5 nm or less.

The average particle size of the metal is measured with a TEM (transmission electron microscope) or by SAXS (small-angle X-ray scattering).

From the viewpoint of higher power generation efficiency of a fuel cell, the amount of the metal supported is preferably 20 mass% or more, more preferably 30 mass% or more, relative to the total mass of the catalyst.

From the viewpoint of power generation efficiency of a fuel cell, the amount of the metal supported is preferably 70 mass% or less, more preferably 60 mass% or less, relative to the total mass of the catalyst.

In the case where the catalyst includes a carrier, a ratio of the mass of the polymer H to the mass of the carrier in the catalyst (mass of the polymer H/mass of the carrier) is preferably 0.60 or more, in terms of increasing the efficiency, power, and durability of fuel cells, more preferably 0.70 or more and even more preferably 0.75 or more.

In the case where the catalyst includes a carrier, the ratio of the mass of the polymer H to the mass of the carrier in the catalyst is preferably 1.2 or less, in terms of increasing the efficiency, power, and durability of fuel cells, more preferably 1.0 or less and even more preferably 0.9 or less.

### <Solvent>

The present composition includes a solvent.

The solvent includes water and an alcohol.

Specific examples of the alcohol include methanol, ethanol, propanol (specifically, 1-propanol and 2-propanol), 1-butanol, 2-methyl-1-propanol, 2-butanol, 2-methyl-2-propanol, 2,2,2-trifluoroethanol, 2,2,3,3,3-pentafluoro-1-propanol, 2,2,3,3-tetrafluoro-1-propanol, 4,4,5,5,5-pentafluoro-1-pentanol, 1,1,1,3,3,3-hexafluoro-2-propanol, 3,3,3-trifluoro-1-propanol, 3,3,4,4,5,5,6,6,6-nonafluoro-1-hexanol, and 3,3,4,4,5,5,6,6,7,7,8,8,8-tridecafluoro-1-octanol.

The alcohol is not limited so long as it contains at least propanol, and may be used alone or in combination of two or more.

The content of water in the solvent relative to the total mass of the solvent is preferably 50 mass% or more, more preferably 55 mass% or more, still more preferably 60 mass% or more, and is preferably 90 mass% or less, more preferably less than 80 mass%, still more preferably 70 mass% or less. When the content of water in the solvent is within the above range, the occurrence of cracking of the catalyst layer can be further suppressed.

The content of water in the present composition relative to the total mass of the present composition is preferably 40 mass% or more, more preferably 45 mass% or more, still more preferably 50 mass% or more, from the viewpoint of suppressing cracking of the catalyst layer, and is preferably 70 mass% or less, more preferably 65 mass% or less, still more preferably 60 mass% or less, from the viewpoint of stability of the present composition.

The content of the alcohol in the present composition relative to the total mass of the present composition is preferably 20 mass% or more, more preferably 30 mass% or more, still more preferably 35 mass% or more, from the viewpoint of suppressing the occurrence of cracking of the catalyst layer, and is preferably 60 mass% or less, more preferably 50 mass% or less, still more preferably 40 mass% or less, from the viewpoint of stability of the present composition.

A content of the propanol in the alcohol is 50 mass% or more. The content is preferably 80 mass% or more and more preferably 90 mass% or more and is preferably 100 mass% or less and more preferably 100 mass%. When the content of the propanol in the alcohol is within any of these ranges, the formation of cracks in the catalyst layer can be further inhibited.

The content of the propanol in the solvent is preferably 15 mass% or more based on a total mass of the solvent, in terms of inhibiting cracking in the catalyst layer. The content is more preferably 30 mass% or more and even more preferably 40 mass% or more. Furthermore, the content is preferably 70 mass% or less, in terms of the stability of the present composition. The content is more preferably 60 mass% or less and even more preferably 50 mass% or less.

The content of the propanol in the present composition is preferably 15 mass% or more based on the total mass of the present composition, in terms of inhibiting cracking in the catalyst layer. The content is more preferably 20 mass% or more and even more preferably 30 mass% or more. Furthermore, the content is preferably 60 mass% or less, in terms of the stability of the present composition. The content is more preferably 50 mass% or less and even more preferably 40 mass% or less.

### [Membrane Electrode Assembly]

A membrane electrode assembly according to the present invention includes an anode having a catalyst layer, a cathode having a catalyst layer, and a polymer electrolyte membrane disposed between the anode and the cathode. The membrane electrode assembly is suitably used for a polymer electrolyte fuel cell.

The present composition described above may be used for forming either the catalyst layer of the anode or the catalyst layer of the cathode, and is preferably used for forming the catalyst layer of the cathode from the viewpoint of being effective in providing a higher current output.

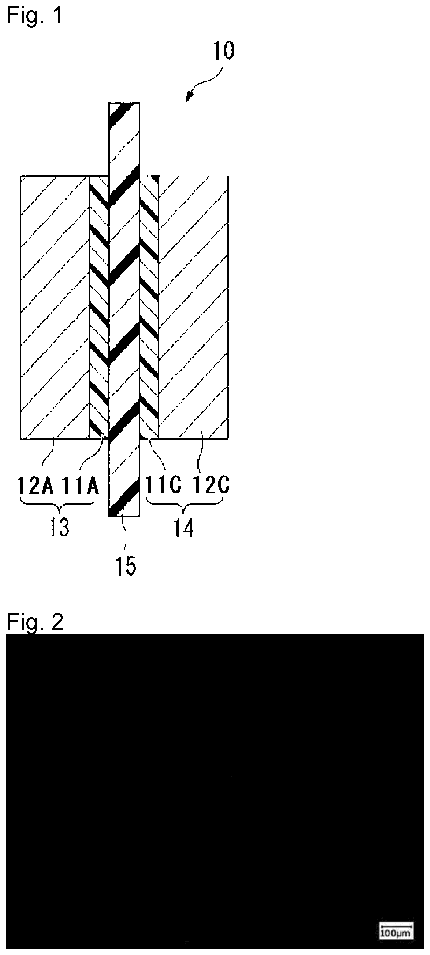

Fig. 1 is a sectional view illustrating an example of the membrane electrode assembly according to the present invention. A membrane electrode assembly 10 includes an anode 13 having a catalyst layer 11A and a gas diffusion layer 12A, a cathode 14 having a catalyst layer 11C and a gas diffusion layer 12C, and a polymer electrolyte membrane 15 disposed between the anode 13 and the cathode 14 in contact with the catalyst layer 11A and the catalyst layer 11C.

Examples of the method for forming the catalyst layer 11C include, but are not limited to, the following methods.
(i) A method in which the present composition is applied onto the polymer electrolyte membrane 15 or the gas diffusion layer 12C and dried.
(ii) A method in which the present composition is applied onto a substrate film and dried to form the catalyst layer 11C, and the catalyst layer 11C is transferred onto the polymer electrolyte membrane 15.

The gas diffusion layer 12C has a function to uniformly diffuse gas to the catalyst layer 11C and a function as a current collector.

Examples of the gas diffusion layer 12C include carbon paper, carbon cloth, and carbon felt. The gas diffusion layer 12C is preferably treated with polytetrafluoroethylene or the like to be water-repellent.

Although the gas diffusion layer 12C is included in the membrane electrode assembly 10 in Fig. 1, the gas diffusion layer is an optional member and may not be included in the membrane electrode assembly.

The catalyst layer 11A included in the anode 13 may be a known catalyst layer for an anode, and can be produced in the same manner as the known catalyst layer for an anode.

Specific examples of the gas diffusion layer 12A included in the anode 13 are the same as the specific examples of the gas diffusion layer 12C described above, and the gas diffusion layer 12A is an optional member as with the gas diffusion layer 12C.

The polymer electrolyte membrane 15 is a membrane including a polymer having an ion exchange group.

Examples of the polymer having an ion exchange group include polymer H described above and known polymers having an ion exchange group.

Specific examples of known polymers include a polymer obtained by converting a group represented by -SO₂F of a polymer having a unit based on monomer (m31) and a unit based on tetrafluoroethylene into a sulfonic acid group, as described in International Publication No. 2020/145287, and a polymer obtained by converting a group represented by -SO₂F of a polymer having a unit based on monomer (m32) and a unit based on tetrafluoroethylene into a sulfonic acid group, as described in International Publication No. 2020/145287.

The polymer electrolyte membrane 15 can be formed, for example, by a method (casting method) in which a liquid composition of a polymer is applied onto a substrate film or a catalyst layer (the catalyst layer 11A or the catalyst layer 11C) and dried.

The liquid composition is a dispersion liquid in which the polymer is dispersed in a solvent including at least one of an organic solvent and water.

In order to stabilize the polymer electrolyte membrane 15, heat treatment is preferably performed. The heat treatment temperature varies depending on the type of polymer, and is preferably 130°C to 200°C.

The polymer electrolyte membrane 15 may be treated with a hydrogen peroxide solution as necessary.

The polymer electrolyte membrane 15 may be reinforced with a reinforcing material. Examples of the reinforcing material include porous bodies, fibers, woven fabric, and nonwoven fabric. Examples of the material of the reinforcing material include polytetrafluoroethylene, tetrafluoroethylene-hexafluoropropylene copolymers, tetrafluoroethylene-perfluoro(alkyl vinyl ether) copolymers, polyethylene, polypropylene, and polyphenylene sulfide.

The polymer electrolyte membrane 15 may include one or more atoms selected from the group consisting of cerium and manganese in order to further improve durability. Cerium and manganese decompose hydrogen peroxide, which is a substance that causes deterioration of the polymer electrolyte membrane 15. Cerium and manganese are preferably present in the polymer electrolyte membrane 15 in the form of ions, and may be present in any state in the polymer electrolyte membrane 15 as long as they are present in the form of ions.

The polymer electrolyte membrane 15 may include silica or a heteropolyacid (zirconium phosphate, phosphomolybdic acid, phosphotungstic acid, or the like) as a water retention agent for preventing drying.

The membrane electrode assembly 10 is produced, for example, by the following methods.
(i) A method in which catalyst layers (the catalyst layer 11A and the catalyst layer 11C) are formed on the polymer electrolyte membrane 15 to obtain a membrane catalyst layer assembly, and the membrane catalyst layer assembly is sandwiched between gas diffusion layers (the gas diffusion layer 12A and the gas diffusion layer 12C).
(ii) A method in which catalyst layers (the catalyst layer 11A and the catalyst layer 11C) are formed on gas diffusion layers (the gas diffusion layer 12A and the gas diffusion layer 12C) to obtain electrodes (the anode 13 and the cathode 14), and the polymer electrolyte membrane 15 is sandwiched between the electrodes.

The membrane electrode assembly 10 may include a carbon layer (not illustrated) between the catalyst layer and the gas diffusion layer. By disposing the carbon layer, gas diffusibility on a surface of the catalyst layer 11 is improved, and power generation performance of a fuel cell can be further improved.

The carbon layer includes, for example, carbon and a nonionic fluorinated polymer. Specifically, for example, the carbon is preferably a carbon nanofiber having a fiber diameter of 1 to 1,000 nm and a fiber length of 1,000 µm or less. One specific example of the nonionic fluorinated polymer is polytetrafluoroethylene.

### [Polymer Electrolyte Fuel Cell]

A polymer electrolyte fuel cell according to the present invention includes the membrane electrode assembly described above.

The polymer electrolyte fuel cell according to the present invention may include, on both surfaces of the membrane electrode assembly, separators in which grooves serving as gas flow paths are formed.

Specific examples of the separators include metal separators, carbon separators, separators made of materials obtained by mixing graphite and resin, and separators made of various conductive materials.

In the polymer electrolyte fuel cell, power is generated by supplying a gas containing oxygen to the cathode and supplying a gas containing hydrogen to the anode.

The membrane electrode assembly described above can be applied also to a methanol fuel cell that generates power by supplying methanol to the anode.

### EXAMPLES

The present invention will be described in detail below with reference to examples. Examples 1-1 to 1-5 are Examples of the present invention, and Example 1-6 and 1-7 are Comparative Examples.

However, the present invention is not limited to these examples. The amounts of components in the table given later are by mass.

### [Ion Exchange Capacity]

In the case where the ion exchange capacity was determined with respect to polymer F, which is the precursor, the value was determined by the following operation. Ratios of the respective units in polymer F were calculated from ¹⁹F-NMR measurements. The ion exchange capacity was calculated from the ratio of the unit B, among all the ratios.

In the case where the ion exchange capacity was determined with respect to the polymer H, the value was determined by the following operation. A polymer F-1, which is described below, was subjected to pressure forming to form a membrane (thickness: 100 µm) of polymer F-1, at a pressure of 4 MPa (gauge pressure) at a temperature of 210°C or at a temperature 10°C higher than the TQ value, whichever temperature was lower. The membrane of polymer F-1 was immersed in an aqueous alkaline solution, shown in Table 2, at 80°C for 16 hours to hydrolyze and convert the -SO₂F of polymer F-1 to -SO₃K. Furthermore, the membrane of the polymer was immersed in a 3 mol/L aqueous hydrochloric acid solution at 50°C for 30 minutes and subsequently immersed in ultrapure water at 80°C for 30 minutes. This cycle of immersion in the aqueous hydrochloric acid solution and immersion in the ultrapure water was performed a total of five times to convert the -SO₃K of the polymer to -SO₃H. Washing with ultrapure water was repeated until the pH of the water in which the membrane of the polymer was immersed reached 7. The membrane of the polymer was air-dried between sheets of filter paper to form a membrane of a polymer H-1. The membrane of the polymer H-1 was dried in a glove box with nitrogen flow until the weight did not change, and then, the membrane was weighed. Subsequently, the membrane of the polymer H-1 was immersed in a 0.85 mol/g sodium hydroxide solution (solvent: water/methanol = 10/90 (mass ratio)) at 60°C for 72 hours or more, to convert the acid form sulfonic acid group to a sodium salt form sulfonate group. The amount of the residual sodium hydroxide was determined by back titration with 0.1 mol/L hydrochloric acid to determine the ion exchange capacity of the polymer H-1.

### <¹⁹F-NMR>

¹⁹F-NMR was measured under conditions of frequency: 282.7 MHz and chemical shift reference: CFCl₃. Composition analysis of polymer F was performed by using hexafluorobenzene as a dissolution solvent and adjusting the solution concentration to 10 mass%.

### <Ratio of Units>

The ratio of units in a polymer derived from monomer units was calculated from measured values of ¹⁹F-NMR. The contents of units in fluorinated polymer H are substantially equal to the contents of the units in polymer F.

### <TQ Value>

Using a flow tester (CFT-500A manufactured by Shimadzu Corporation) equipped with a nozzle having a length of 1 mm and an inner diameter of 1 mm, polymer F was melt-extruded at an extrusion pressure of 2.94 MPa (gauge pressure) while the temperature was varied. The temperature (TQ value) at which the extrusion rate of polymer F was 100 mm³/s was determined. When the TQ value exceeded 300°C, four extrusion rates at 300°C or lower were determined, and the TQ value was determined by extrapolation from the four measured values. The extrapolation was performed using an approximate expression obtained by logarithmically approximating the correlation between the extrusion rate and the reciprocal of the absolute temperature. For polymers having the same composition, a polymer having a higher TQ value has a larger molecular weight.

### <Softening Temperature>

Dynamic viscoelasticity measurement was performed on a polymer electrolyte membrane using a dynamic viscoelasticity measuring apparatus (DVA-225 manufactured by IT Keisoku Seigyo Co., Ltd.) under conditions of sample width: 5.0 mm, grip-to-grip distance: 15 mm, measurement frequency: 1 Hz, temperature rising rate: 2°C/min, and tensile mode. From the ratio (E"/E') of a loss modulus E" to a storage modulus E', tanδ (loss tangent) was calculated, and a tanδ-temperature curve was prepared. From the tanδ-temperature curve, a peak temperature between -100°C and 200°C was read, and this value was determined as the softening temperature of polymer H. The softening temperature corresponds to a temperature at which a transition from a glassy state to a rubbery state occurs. The basic dimensions and thickness of the membrane used for the calculation were measured under conditions of temperature: 23°C and relative humidity: 50% RH.

### (Abbreviations)

TFE: tetrafluoroethylene
PFB: CF₃CF₂CF₂C(O)OOC(O)CF₂CF₂CF₃
HFC-52-13p: CF₃(CF₂)₅H

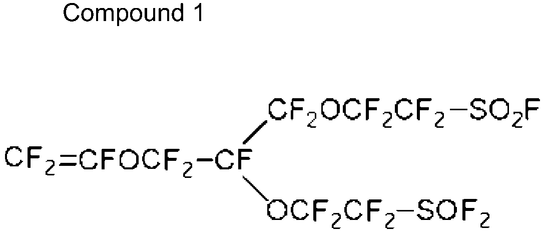

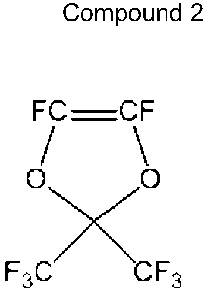

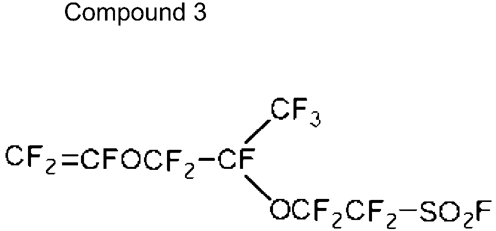

### <Synthesis of Polymer F-1>

A stainless-steel autoclave having an internal capacity of 2,575 mL was depressurized in an ice bath, 1116.02 g of compound 1, 340.92 g of compound 2, 407.78 mg of PFB dissolved in HFC-52-13p at a concentration of 3.2 mass%, and 172.0 g of HFC-52-13p were drawn into the autoclave, and the autoclave was depressurized again. Thereafter, 56.90 g of TFE was charged, and the temperature was raised to 24°C to start a reaction. Stirring during the reaction was performed with a double helical ribbon impeller, and the stirring rotation speed was set to 60 rpm for a period from the start of the reaction to 2.5 hours, 30 rpm for a period from 2.5 hours to 3.5 hours, and 10 rpm for a period from 3.5 hours to 10 hours. After stirring for 10 hours, the autoclave was depressurized, and unreacted compound 2 and TFE were distilled off. Thereafter, the product was diluted with HFC-52-13p and then mixed with a mixed solution of HFC-52-13p:methanol = 8:2 (mass ratio), and a polymer was coagulated and filtered. The polymer was washed in a mixed solution of HFC-52-13p:methanol = 7:3 (mass ratio) and separated by filtration, and then solids were dried at 80°C and then vacuum-dried at 210°C to obtain polymer F-1.

The chemical composition, ion exchange capacity, and TQ value of polymer F-1 are shown in Table 1.

**[Table 1]**

| Type of Polymer F | F-1 |
|---|---|
| Unit of Compound 1 [mol%] | 14.9 |
| Unit of Compound 2 (Cyclic Ether Structural Unit) [mol%] | 59.9 |
| Unit of TFE [mol%] | 25.2 |
| Ion Exchange Capacity [meq/g dry resin] | 1.1 |
| TQ value [°C] | 290 |

### [Synthesis of Polymer H-1]

A powder of a polymer H-1 was prepared from polymer F-1 in the following manner.

Polymer F-1 was ground to a diameter of 2 mm. Polymer F-1 was immersed in an aqueous alkaline solution, shown in Table 2, at 80°C for 70 hours to hydrolyze and convert the -SO₂F of polymer F-1 to -SO₃K. Furthermore, the polymer was immersed in a 3 mol/L aqueous hydrochloric acid solution at 80°C for 30 minutes and subsequently immersed in ultrapure water at 80°C for 30 minutes. This cycle of immersion in the aqueous hydrochloric acid solution and immersion in the ultrapure water was performed a total of ten times to convert the -SO₃K of the polymer to -SO₃H. Washing with ultrapure water was repeated until the pH of the water in which the polymer was immersed reached 7. The resultant was dried under nitrogen flow to afford the powder of the polymer H-1. The results are shown in Table 2.

In Table 2, an aqueous solution A is a solution of potassium hydroxide, dimethyl sulfoxide, and water in a mass ratio of 15/30/55.

**[Table 2]**

| Type of Polymer H | H-1 |
|---|---|
| Polymer F Used | F-1 |
| Aqueous Alkaline Solution Used | Aqueous Solution A |

The ion exchange capacity and the softening temperature of the polymer H-1 were measured. The results are shown in Table 3.

**[Table 3]**

| Type of Polymer H | H-1 |
|---|---|
| Ion Exchange Capacity [meq/g dry resin] | 1.1 |
| Softening Temperature [°C] | 172 |

### [Preparation of Liquid Composition S-1]

18.70 g of the powder of the polymer H-1 (details: the mass of the polymer was 18.22 g, the mass of the water was 0.48 g, and the solid concentration was 97.4 mass%), 22.81 g of ultrapure water, and 54.36 g of 1-propanol were added to a 0.2-L glass autoclave. The contents were stirred at 300 rpm at 115°C for 13 hours and then diluted with 31.0 g of ultrapure water. The resultant was stirred at 110°C for 1 hour and subsequently naturally cooled, and then, the solution was removed from the autoclave. This solution was diluted with 25.6 g of ultrapure water and 25.6 g of 1-propanol. The resultant was stirred at 110°C for 1 hour and subsequently naturally cooled and filtered through a pressure filter (filter paper: PF-040, manufactured by Advantec Toyo Kaisha, Ltd.), to afford a liquid composition S-1, in which the polymer H-1 was dispersed in the mixed solvent at a concentration of 10.2 mass%.

### [Preparation of Cathode Catalyst Layer-Forming Composition]

### <Catalyst (carbon-supported platinum)>

Catalysts were prepared, which were carbon-supported platinum 1 and carbon-supported platinum 2.

### (Carbon-Supported Platinum 1)

Type of metal: platinum particles
Content of platinum particles based on total mass of carbon-supported platinum: 46.9 mass%
Number average particle size of platinum particles: 2.4 nm
Type of porous carrier: carbon carrier
Specific surface area of carbon carrier: 800 m²/g

### (Carbon-Supported Platinum 2)

Type of metal: platinum particles
Content of platinum particles based on total mass of carbon-supported platinum: 46.9 mass%
Number average particle size of platinum particles: 2.4 nm
Type of porous carrier: carbon carrier
Specific surface area of carbon carrier: 140 m²/g

### <Example 1-1>

23.7 g of water and 14.2 g of 1-propanol were added to 3.0 g of carbon-supported platinum 1, and these were mixed together. 12.5 g of the liquid composition S-1 was added to this so that an I/C (a ratio of the mass of the polymer H to the mass of the carbon carrier) would be 0.8 and that the solid concentration would be 8.0 mass%. Dispersion was performed in a planetary ball mill (model: LP-4, manufactured by Ito Seisakusho Co. Ltd,.) with 5 mm zirconia beads, at a rotational speed of 300 rpm for a dispersion time of 180 minutes. Subsequently, the resultant was diluted with 10.7 g of water and 7.1 g of 1-propanol so that the solid concentration after dispersion would be 6.0 mass%. Accordingly, a cathode catalyst layer-forming composition CI-1 was prepared.

### <Example 1-2>

23.7 g of water and 14.2 g of 1-propanol were added to 3.0 g of carbon-supported platinum 1, and these were mixed together. 12.5 g of the liquid composition S-1 was added to this so that the I/C would be 0.8 and that the solid concentration would be 8.0 mass%. Dispersion was performed in a planetary ball mill (model: LP-4, manufactured by Ito Seisakusho Co. Ltd,.) with 5 mm zirconia beads, at a rotational speed of 300 rpm for a dispersion time of 180 minutes. Accordingly, a cathode catalyst layer-forming composition CI-2 was prepared.

### <Example 1-3>

23.0 g of water and 14.1 g of 1-propanol were added to 3.0 g of carbon-supported platinum 1, and these were mixed together. 9.3 g of the liquid composition S-1 was added to this so that the I/C would be 0.6 and that the solid concentration would be 8.0 mass%. Dispersion was performed in a planetary ball mill (model: LP-4, manufactured by Ito Seisakusho Co. Ltd,.) with 5 mm zirconia beads, at a rotational speed of 300 rpm for a dispersion time of 180 minutes. Subsequently, the resultant was diluted with 9.9 g of water and 6.6 g of 1-propanol so that the solid concentration after dispersion would be 6.0 mass%. Accordingly, a cathode catalyst layer-forming composition CI-3 was prepared.

### <Example 1-4>

33.5 g of water and 4.4 g of 1-propanol were added to 3.0 g of carbon-supported platinum 1, and these were mixed together. 12.5 g of the liquid composition S-1 was added to this so that the I/C would be 0.8 and that the solid concentration would be 8.0 mass%. Dispersion was performed in a planetary ball mill (model: LP-4, manufactured by Ito Seisakusho Co. Ltd,.) with 5 mm zirconia beads, at a rotational speed of 300 rpm for a dispersion time of 180 minutes. Subsequently, the resultant was diluted with 14.2 g of water and 3.6 g of 1-propanol so that the solid concentration after dispersion would be 6.0 mass%. Accordingly, a cathode catalyst layer-forming composition CI-4 was prepared.

### <Example 1-5>

7.3 g of water and 9.1 g of 1-propanol were added to 3.0 g of carbon-supported platinum 2, and these were mixed together. 1.9 g of the liquid composition S-1 was added to this so that an I/C (a weight ratio of the ionomer to the catalyst carbon) would be 0.12 and that the solid concentration would be 15.0 mass%. Dispersion was performed in a planetary ball mill (model: LP-4, manufactured by Ito Seisakusho Co. Ltd,.) with 5 mm zirconia beads, at a rotational speed of 300 rpm for a dispersion time of 90 minutes. Subsequently, 15.7 g of water and 5.0 g of 1-propanol were added, and 7.5 g of the liquid composition S-1 was added so that, after dispersion, the I/C would be 0.6, and the solid concentration would be 8.0 mass%. Dispersion was performed in the same planetary ball mill with 5 mm zirconia beads, at a rotational speed of 300 rpm for a dispersion time of 90 minutes. Accordingly, a cathode catalyst layer-forming composition CI-5 was prepared.

### <Example 1-6>

13.9 g of water and 24.0 g of 1-propanol were added to 3.0 g of carbon-supported platinum 1, and these were mixed together. 12.5 g of the liquid composition S-1 was added to this so that the I/C would be 0.8 and that the solid concentration would be 8.0 mass%. Dispersion was performed in a planetary ball mill (model: LP-4, manufactured by Ito Seisakusho Co. Ltd,.) with 5 mm zirconia beads, at a rotational speed of 300 rpm for a dispersion time of 180 minutes. Subsequently, the resultant was diluted with 7.1 g of water and 10.7 g of 1-propanol so that the solid concentration after dispersion would be 6.0 mass%. Accordingly, a cathode catalyst layer-forming composition CI-6 was prepared.

### <Example 1-7>

17.3 g of water and 9.9 g of ethanol were added to 3.0 g of carbon-supported platinum 1, and these were mixed together. 12.5 g of the liquid composition S-1 was added to this so that the I/C would be 0.8 and that the solid concentration would be 10.0 mass%. Dispersion was performed in a planetary ball mill (model: LP-4, manufactured by Ito Seisakusho Co. Ltd,.) with 5 mm zirconia beads, at a rotational speed of 300 rpm for a dispersion time of 180 minutes. Subsequently, the resultant was diluted with 17.1 g of water, 8.0 g of ethanol, and 3.4 g of 1-propanol so that the solid concentration after dispersion would be 6.0 mass%. Accordingly, a cathode catalyst layer-forming composition CI-7 was prepared.

The chemical compositions of the catalyst layer-forming compositions of Examples 1-1 to 1-7 are shown in Table 4 below.

### [Evaluation of Crack Susceptibility of Catalyst Layer]

### <Formation of Catalyst Layer>

A polymer electrolyte membrane was prepared, which was an ion exchange membrane (ion exchange capacity: 1.25 meq/g dry resin) having a thickness of 25 µm and made of a polymer having an acid form sulfonic acid group, the polymer being derived from a copolymer of TFE and compound 3 by converting the SO₂F group thereof to an SO₃H group.

The catalyst layer-forming composition of each Example was applied onto the electrolyte membrane with a die coater so that an amount of platinum would be 0.2 mg/cm². The resultant was dried at 80°C for 10 minutes to give a multi-layer body in which a catalyst layer (cathode catalyst layer) was formed on one surface of the polymer electrolyte membrane.

### <Evaluation Method>

Images of the surfaces of the catalyst layers (cathode catalyst layers) corresponding to the respective Examples were acquired with a digital microscope (model: VHX-5000, manufactured by Keyence Corporation) at a magnification of 200.

Based on the obtained image of the surface, crack susceptibility of each of the catalyst layers was evaluated according to the following criteria. The evaluation results are shown in Table 4 below.

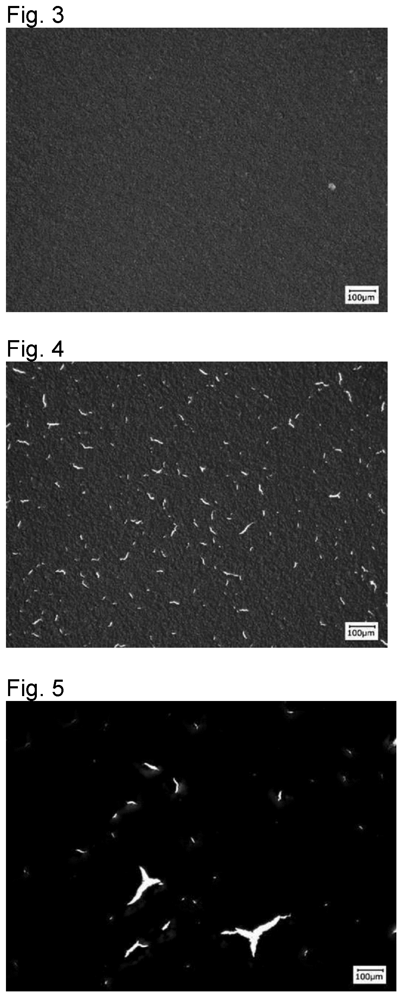

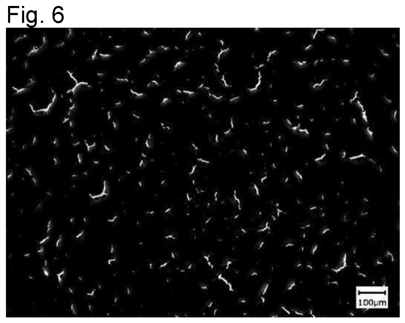

Representative examples of the images of the surface of the catalyst layer are as follows: Figs. 2 to 4 show the images of the surfaces of the catalyst layers corresponding to Examples 1-1 to 1-3, and Figs. 5 and 6 show the images of the surfaces of the catalyst layers corresponding to Examples 1-6 and 1-7.
A: No cracks are observed in the surface of the catalyst layer.
B: A crack is observed in the surface of the catalyst layer, but the size of the crack is small.
C: A crack with a large size is observed in the surface of the catalyst layer, or cracks with a medium size are observed across the entire surface.

**[Table 4]**

| | | | | Example 1-1 | Example 1-2 | Example 1-3 | Example 1-4 | Example 1-5 | Example 1-6 | Example 1-7 |
|---|---|---|---|---|---|---|---|---|---|---|
| Cathode Catalyst Layer-Forming Composition | Type | | | Cl-1 | CI-2 | CI-3 | CI-4 | CI-5 | CI-6 | CI-7 |
| | Fluorinated polymer | Polymer H-1 [mass%] | | 1.8 | 2.4 | 1.4 | 1.8 | 1.9 | 1.8 | 1.8 |
| | Catalyst | Carbon-Supported Platinum 1 [mass%] | | 4.2 | 5.6 | 4.6 | 4.2 | 0.0 | 4.2 | 4.2 |
| | | Carbon-Supported Platinum 2 [mass%] | | | | | | 6.1 | | |
| | Solvent | Water [mass%] | | 56.3 | 55.1 | 56.4 | 75.2 | 55.1 | 37.5 | 56.3 |
| | | Alcohol | 1-Propanol [mass%] | 37.7 | 36.9 | 37.6 | 18.8 | 36.9 | 56.5 | 12.5 |
| | | | Ethanol [mass%] | 0.0 | 0.0 | 0.0 | 0.0 | 0.0 | 0.0 | 25.1 |
| | Content of Water in Solvent [mass%] | | | 60 | 60 | 60 | 80 | 60 | 40 | 60 |
| | Content of 1-Propanol in Alcohol [mass%] | | | 100 | 100 | 100 | 100 | 100 | 100 | 33 |
| | Solid Concentration [mass%] | | | 6 | 8 | 6 | 6 | 8 | 6 | 6 |
| | I/C | | | 0.80 | 0.80 | 0.60 | 0.80 | 0.60 | 0.80 | 0.80 |
| Various Physical Properties | Ion Exchange Capacity of Polymer H [meq/g dry resin] | | | 1.1 | 1.1 | 1.1 | 1.1 | 1.1 | 1.1 | 1.1 |
| | Specific Surface Area of Catalyst [m²/g] | | | 800 | 800 | 800 | 800 | 140 | 800 | 800 |
| Evaluation Results | Crack Susceptibility of Catalyst Layer | | | A | A | B | B | B | C | C |

As shown in Table 4, it was confirmed that in the cases where the catalyst composition of the present invention was used, the formation of cracks in the catalyst layer was sufficiently inhibited (Examples 1-1 to 1-5).

### REFERENCE SYMBOLS

- 10: membrane electrode assembly
- 11A, 11C: catalyst layer
- 12A, 12C: gas diffusion layer
- 13: anode
- 14: cathode
- 15: polymer electrolyte membrane

The entire disclosure of Japanese Patent Application No. 2023-182668 filed on October 24, 2023 including specification, claims, drawings and summary is incorporated herein by reference in its entirety.

## Claims

1. A catalyst layer-forming composition comprising:
a fluorinated polymer that has a unit having a cyclic ether structure and has an ion-exchange group;
a catalyst; and
a solvent, wherein
the solvent includes water and an alcohol,
the alcohol includes propanol,
a content of the water is 50 mass% or more based on a total mass of the solvent, and
a content of the propanol is 50 mass% or more based on a total mass of the alcohol.

2. The catalyst layer-forming composition according to Claim 1, wherein
the catalyst includes a carrier and a metal supported on the carrier, and
a ratio of a mass of the fluorinated polymer to a mass of the carrier is 0.75 or more.

3. The catalyst layer-forming composition according to Claim 1 or 2, wherein the carbon carrier has a specific surface area of 700 m²/g or more.

4. The catalyst layer-forming composition according to Claim 1 or 2, wherein the content of the water is less than 80 mass% based on the total mass of the solvent.

5. The catalyst layer-forming composition according to Claim 1 or 2, wherein the catalyst layer-forming composition has a solid concentration of 10 mass% or less.

6. The catalyst layer-forming composition according to Claim 1 or 2, wherein the fluorinated polymer has an ion exchange capacity of 0.8 meq/g dry resin or more.

7. The catalyst layer-forming composition according to Claim 1 or 2, wherein a content of the unit having a cyclic ether structure is 50 mol% or more based on all units in the fluorinated polymer.

8. The catalyst layer-forming composition according to Claim 1 or 2, wherein the fluorinated polymer includes a unit represented by formula (A-2): 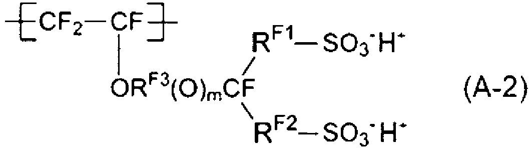 where
R^{F1} and R^{F2} are each independently a perfluoroalkylene group having 1 to 3 carbon atoms or a divalent group corresponding to a perfluoroalkylene group except that a -CF₂- is substituted with an etheric oxygen atom,
R^{F3} is a perfluoroalkylene group having 1 to 6 carbon atoms and optionally having an etheric oxygen atom, and
m is 0 or 1.

9. The catalyst layer-forming composition according to Claim 1 or 2, wherein the fluorinated polymer includes a unit based on tetrafluoroethylene.

10. The catalyst layer-forming composition according to Claim 1 or 2, which is used for forming a catalyst layer of a cathode of a membrane electrode assembly including, an anode having a catalyst layer, the cathode having the catalyst layer, and a polymer electrolyte membrane disposed between the anode and the cathode.

11. The catalyst layer-forming composition according to Claim 1 or 2, wherein the membrane electrode assembly as defined in Claim 10 is a membrane electrode assembly for use in a polymer electrolyte fuel cell.
